# EUROPEAN PATENT APPLICATION

(11) **EP 2 174 724 A1**
(43) Date of publication of application: **14.04.2010**
(21) Application number: 08166278.5
(22) Date of filing: 09.10.2008
(51) Int. Cl.: B07B 1/12, B07B 1/42, B03B 9/06

(54) **Device and method for separating plastics from a mixed mass of organic waste**

(71) Applicant: Ros Roca Ingenieria del Medio Ambiente S.L., 25300 Tarrega Lerida (ES)
(72) Inventor: Péreez Losada, Carlos Vicente, 25300, Tàrrega (Lleida) (ES); Miralles Puig, Jaume, 25300, Tàrrega (Lleida) (ES)
(74) Representative: ZBM Patents

(57) **Abstract**

The device (10) has screening means (20) for separating plastic materials from a mass of organic waste (15), said means (20) comprising rows (21 a-21f) of rods (21) movable for repeatedly beating the mass (15) upwards such that organic matter falls down between rods (21) and plastic materials are entangled or withheld thereon. Rod rows (21a-21f) may be arranged at different heights and offset to each other in a mass flow direction (30). Rod angle adjusting means (40) may be provided as well as driving means (50) for causing the rods (21) to perform a semicircular reciprocating movement for beating the mass (15) upwards. The method consists in repeatedly beating the mass (15) upwards by the rods (21) of said device (10) so that organic matter is caused to fall down between rods (21) and plastic materials entangled or withheld thereon. A mass homogenising treatment step may be further performed previously.

## Description

### Field of the invention

The present invention generally refers to a device for separating plastic materials from a mixed mass organic waste according to the preamble of claim 1. In the device of the invention, the plastic materials are separated through the use of suitable screening means.

The invention further relates to a method for separating plastic materials from a mixed mass of organic waste according to the preamble of claim 9 by using such device.

### Background of the invention

The use of organic waste from, for example, greenhouse cultivations for obtaining organic fertilizer, requires the organic fraction to be separated from the plastic materials, said plastic materials being, for example, plastic holders, e.g. raffia ropes, that are provided for plant growth for guiding the plant throughout its growth.

One example of how such separation can be performed is disclosed in EP1767283. This document provides a separator system for separating a mixed material. The separator comprises a trough and inlet and outlet ends. Angled screen sections supported in the trough are fixed within the trough. In use, the mixed material moves across the screen section from the inlet end to the outlet end under the influence of the vibratory motion imparted to trough (and thus screen section) by a vibratory generator. This causes that smaller constituent materials within the mixed material fall on the trough floor and the larger constituent materials to move along a separation deck to cantilevered arms.

In use, the entire trough structure is moved by a vibratory generator in use resulting in a separator system being complex in construction as the entire trough has to be coupled to a frame by rigid links and to a counterbalance by resilient members.

On the other hand, plastic materials from a mixed mass of organic waste can not be fully effectively separated in this separator due to the fixed screen section arrangement which would result in system block because of raffia rope strength.

There is thus a need for a efficient way for separating plastic materials from a mixed mass of organic waste such that organic waste can be subsequently effectively used.

### Summary of the invention

The invention provides a device for separating plastic materials from a mass of organic waste. Such device is intended to be usually placed in a production line between a feeding section and a conveyor belt that advances the materials separated from the mass into a refuse section for further steps of the process.

The device operates imparting kinetic energy to the mixed mass by repeatedly beating it upwards through comb like metal rods resulting in plastic materials (raffia rope and the like) to be separated from said mixed mass as it will be explained below.

The device includes a frame and a trough attached thereto. The trough has an upper inlet end and a lower outlet end. Access and servicing chute is provided around the frame for operations such as for example lubrication, points of control checking, etc, as well as a refuse section and a lower hopper.

The trough is adapted for receiving the mixed mass to be separated. Said mixed mass comprises mixed organic waste from cultivation that is cyclically fed into the through from a source.

The device is further provided with screening means for separating the plastic materials from the mixed mass. Said screening means comprise a number of rods that are arranged in at least one row according to claim 1.

More particularly, the rods are arranged in rows forming sets of combs, for example four or six rows depending on the required throughput. Said rods are capable of being moved for repeatedly beating the mass to be separated upwards such that the most fragile fraction (e.g. plastic materials) is released. This upward beating movement of the rods is suitable for the separated organic waste to fall down between the rods and causing the plastic materials to be entangled or withheld on said rods for subsequent refuse. The fraction that has not been released from the mixed mass slides from row to row undergoing vigorously beating while moving across the trough to the lower outlet end. The mass of organic waste, already with no plastic materials therein, is concentrated in a lower hopper in the outlet end and guided to a conveyor belt that advances it into the refuse section.

It has been found that by roughly upwardly beating a mixed mass of organic waste the plastic materials therein are effectively separated such that the organic waste can be subsequently effectively used e. g. as fertilizer.

The rods in the device of the invention are arranged forming rows as stated above. Rod rows may be provided at different heights in the device and they may be arranged offset to each other in a mass flow direction.

Rods are arranged in an angled position that can be adjusted according to the requirements. For this purpose rod angle adjusting means are provided in the device of the invention that are suitable for adjusting the inclination of at least some of the rods to the horizontal. Rod angle adjustment can be performed by varying the inclination of the trough.

Rods are driven in rotation by driving means. Said driving means are adapted for causing the rods to perform a semicircular reciprocating movement for repeatedly beating the mass upwards. Said driving means, that are suitable for acting on each of the rod rows either separately or altogether, causes the rods to beat the mixed mass resulting in the separation of the plastic materials therefrom. In one example, driving means may comprise an electric gearmotor that, in use, causes a crankshaft to be rotated which in turn causes a reciprocating rotatable movement of the rod through respective connecting rods for rotating the rods in each row.

In order to remove the plastic materials out from the rods and conduct it into the refuse section, rollers are provided. Such rollers are arranged in the device between rod rows and, as disclosed, are suitable for removing the raffia rope from the rods. Scraping blades may be also provided for cleaning the rollers. In use, the rollers are rotated slowly for suitably removing the raffia from the rods into the refuse section preventing the device from being blocked. The slow rotational movement of said rollers are performed by chain driven gearmotors.

The invention further provides a method for separating plastic materials from a mass of organic waste according to claim 9. The method comprises the steps of repeatedly beating the mass upwards by means of a series of rods so that the organic matter is caused to fall down between the rods and plastic materials is entangled or withheld on said rods.

For a best separation, a previous treatment step for homogenising the mass may be performed in which the mass is previously subjected to a composting or decomposition process for homogenisation since the starting mass from different cultivations may be of different humidity and composition.

Power supply safety cut off means, an electrical panel having meters and the like are further provided therein for safety. Power supply cut off means allows motors to be switched off in the case of an overload.

### The operation of the device is as follows:

Firstly a visual checking for the presence of any obstacle that may interfere with the device startup and for activation or alterations in the safety means is performed. Device servicing is also checked. Then the device is started and the main gearmotor starts driving the crankshaft in rotation which movement is converted, through the connection rod, into a reciprocating movement that is driven to the beating rods.

Rods are driven such that they are moved in different elongation stages to each other for minimizing vibrations.

The mixed mass of organic waste to be separated is fed into the upper inlet end of the through that corresponds to the uppermost portion thereof. Then the mixed mass is beaten by the rods and advanced from rod row to rod row until the fraction that has not been fallen between the rods, that is, the plastic materials, falls through the opposite, lower end and then passed into the refuse section.

Plastic materials such as raffia ropes are removed out from the rods through rotational movement of said rollers into said refuse section.

Once the mass has been separated into organic material (collected on the lower hopper) and plastic materials, the device is switched off and a further checking step is performed for the presence of obstacles or dirt in the movable edges. Then, the device is ready for a next separating process.

Other objects, advantages and features of the device for separating plastic materials from a mixed mass of organic waste of the present invention and the method thereof will be more clear from the description of a preferred embodiment of the invention. This description is given by way of a non-limiting example and it is shown in the appended drawings herein.

### BRIEF DESCRIPTION OF THE DRAWINGS

A particular embodiment of a device for separating plastic materials from a mixed mass of organic waste according to the present invention will be described in the following, only by way of non-limiting example, with reference to the appended drawings, in which:
Fig. 1 is an elevational side view showing one embodiment of a device for separating plastic materials from a mixed mass of organic waste according to the invention;
Fig. 2 is a front view of the device for separating plastic materials from a mixed mass of organic waste in Fig. 1;
Fig. 3 is a part view of a rod row shown from above;
Figs. 4 and 5 are part views of the driving means;
Figs. 6a, 6b and 6c are a part bottom view, a side elevational view and a top plan view of one rod, respectively; and
Figs. 7 is a fragmentary perspective view of a rod row showing the roller for removing the plastic materials collected by the rods.

### DETAILED DESCRIPTION OF PARTICULAR EMBODIMENTS

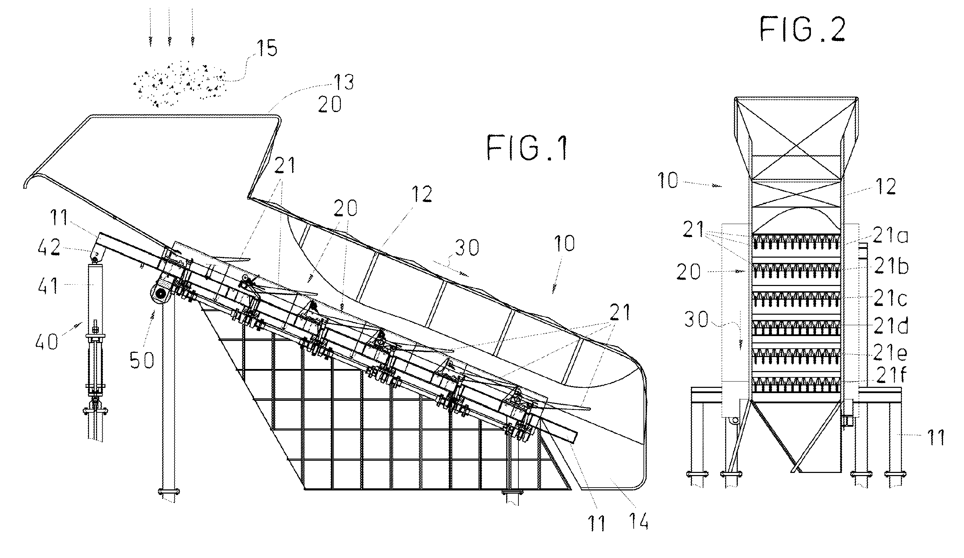

As shown in the figures 1-8 of the drawings attached herewith, a device for separating plastic materials from a mixed mass of organic waste is generally shown by reference numeral 10.

The device 10 is intended to be placed in a production line between a feeding section and a conveyor belt (not shown) that advances the materials separated from the mass into a refuse section for further steps of the process.

The device 10 includes a frame 11 and a trough 12 attached thereto. The trough has an upper inlet end 13 and a lower outlet end 14. The trough 12 is adapted for receiving and separating a mixed mass 15 that comprises organic waste from cultivation that is cyclically fed into the through from a source and plastic materials.

Suitable screening means 20 are further provided in the device 10 for separating said plastic materials from the mixed mass 15. Said screening means 20 comprise a number of rods 21 arranged in rows 21a, 21b, etc, as clearly shown in Figs. 1 and 2, forming sets of combs. In the example shown, six rows 21a, 21b, 21c, 21d, 21e, 21f are provided in the device 10, arranged at different heights and offset to each other in a mass flow direction 30.

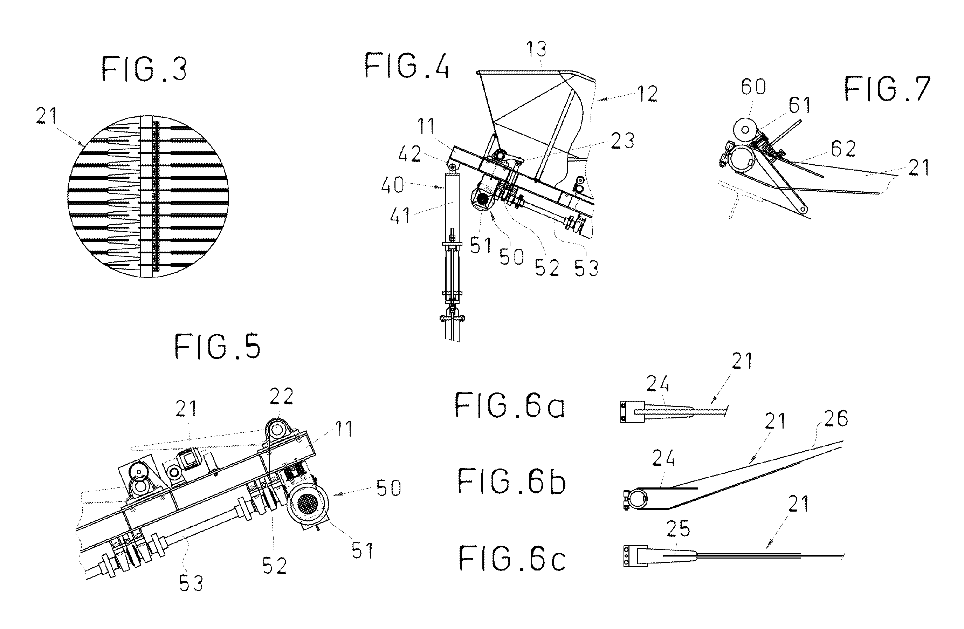

Referring to Figs. 6a-6c, rods 21 comprise a 8 mm wide metal plate having an upper impact portion and a 6 mm wide upper strengthened portion 24 located near the shaft 22 around which rods 21 rotate. Each rod 21 is further provided with a lower strengthened portion 25.

In use, rods 21 are rotatably moved for repeatedly beating the mixed mass 15 to be separated upwards causing the most fragile fraction is released therefrom. Rods 21 are caused to be moved upwards by driving means 50 shown in Figs. 4 and 5. Said driving means 50 comprise an electric gearmotor 51 that, in use, causes a crankshaft 52 to be rotated which in turn causes a reciprocating rotatable movement of the rods 21 through respective connecting rods. Therefore, the driving means 50 are adapted for causing the rods to 21 perform a semicircular reciprocating movement for repeatedly beating the mass 15 upwards. The driving means 50 are capable of acting on each row of rods 21a-21f either separately or altogether through a driving shaft 53.

The movement of the rods 21 by the driving means 50 is suitable for the organic matter to fall down between the rods 21 and for causing plastic materials to be entangled or withheld on said rods 21. The fraction that has not been released (i.e. such plastic material) slides from row to row undergoing vigorously beating while moving across the trough to the outlet end 14. The mass of organic waste, already with no plastic materials therein, is concentrated in a lower hopper adjacent the outlet end 14 and guided to a conveyor belt. Once the mixed mass has been separated, the organic waste collected can be subsequently effectively used e. g. as fertilizer.

Rod angle adjusting means 40 are further provided in the device 10. Such angle adjusting means 40 are shown in Fig. 4 comprising a pair of single acting hydraulic cylinders 41 linked to the upper end of the trough 12. In use, the extension of the hydraulic cylinders 41 upwards causes the upper end 42 of the frame 11 to be lifted resulting in an increased assembly inclination due to the pivotal link of the trough 12 at the lower end thereof. This results in rod angle adjustment ranging from 30° to 15°, preferably 22.5°, according to the requirements. Mass advancement is therefore promoted by inclination of the trough 12 (and therefore rods 21).

Rollers 60 are provided between the rod rows 21a-21f, arranged between rows 21a-21f as shown in Fig. 8, above the common shaft 22 around which rods 21 rotate. In use, rollers 60 are rotated slowly for suitably removing the plastic material out from the rods 60 into the refuse section preventing the device 10 from being blocked. The slow rotational movement of said rollers are performed by three chain driven gearmotors.

Scraping blades 61 are also provided for cleaning the rollers 60, that is, removing the plastic material therefrom. Blades 61, as shown in Fig. 7, have a skirt member 62 made of rubber or the like and on which plastic material is collected. Blades 61 prevent those ropes near the rod shaft 22 (i.e. those receiving less kinetic energy) from falling down the rods 21.

The operation of the device 10 for separating plastic materials from a mixed mass of organic waste is as follows. First an operator performs a visual checking for the presence of any obstacle that may interfere with the device startup and for activation or alterations in the safety means as well as for correct servicing. Then the device 10 is started and the gearmotor 51 of the driving means 50 starts driving the crankshaft 52 in rotation. Such rotation is converted, through a connection rod 23, into a reciprocating movement that is driven to rods 21 so that they are driven in different elongation stages to each such that vibrations are minimized. The mixed mass 15 of organic waste to be separated is then fed into the upper inlet end 13 of the through 12 and the mixed mass is then beaten by the rods 21 while advanced from the uppermost rod row 21a to the lowermost rod row 21f until the fraction that has not been fallen between the rods 21 (the plastic materials) falls through the outlet lower end 14 of the trough 12 and then passed into a refuse section. Then plastic materials (raffia ropes, etc) are removed out from the rods 21 through rotational movement of the rollers 60 into said refuse section.

Once the mass 15 to be separated has been processed into organic material (collected on a lower hopper) and plastic materials, the device 10 is switched off and a further checking step is performed for the presence of obstacles or dirt in the movable edges. Then, the device 10 is ready for a next separating process.

A separation of the mass 15 has been proven to be efficient by the device 10 as herein disclosed that repeatedly beats the mixed mass upwards by rods 21 so that the organic matter is caused to fall down between them and plastic materials to be entangled or withheld thereon. For a best separation, a previous treatment step for homogenising the mass 15 may be performed in which the mass 15 is previously subjected to a composting or decomposition process for homogenisation since the starting mass 15 from different cultivations may be of different humidity and composition.

Although the present invention has been described in the specification and shown in the accompanying drawings with reference to a preferred embodiment thereof, the device for separating plastic from organic waste of the invention is susceptible to various changes without departing from the scope of protection defined in the following claims.

## Claims

1. Device (10) for separating plastics from a mixed mass of organic waste (15) that includes screening means (20) for separating plastic materials from said mass (15), **characterized in that** the screening means (20) comprise at least one row (21a-21f) of rods (21) capable of being moved for repeatedly beating the mass (15) upwards such that the organic matter falls down between the rods (21) and plastic materials are entangled or withheld on said rods (21).

2. Device (10) as claimed in claim 1, wherein it includes a number of rod rows (21a-21f) arranged at different heights.

3. Device (10) as claimed in claim 2, wherein rod rows (21a-21f) are arranged offset to each other in a mass flow direction (30).

4. Device (10) as claimed in claim 1 or 2, wherein if further comprises rod angle adjusting means (40) for adjusting the inclination of at least some of the rods (21) to the horizontal.

5. Device (10) as claimed in any of the preceding claims, wherein it comprises driving means (50) adapted for causing the rods (21) to perform a semicircular reciprocating movement for repeatedly beating the mass (15) upwards.

6. Device (10) as claimed in claim 5, wherein the driving means (50) are suitable for acting on each of the rod rows (21a-21f) separately.

7. Device (10) as claimed in any of the preceding claims, wherein it comprises rollers (60) arranged between the rod rows (21a-21f) for removing the plastic materials out from the rods (21) into a refuse section.

8. Device (10) as claimed in claim 7, wherein it further comprises scraping blades (61) for removing the plastic materials from the rollers (60).

9. Method for separating plastic from a mixed mass of organic waste (15), **characterized in that** it comprises the steps of repeatedly beating the mass (15) upwards by means of a series of rods (21) so that the organic matter is caused to fall down between the rods (21) and plastic materials is entangled or withheld on said rods (21).

10. Method as claimed in claim 9, wherein if further comprises a previous treatment step for homogenising the mass (15).
